# EUROPEAN PATENT APPLICATION

(11) **EP 0 982 182 A1**
(43) Date of publication of application: **01.03.2000**
(21) Application number: 99500149.2
(22) Date of filing: 18.08.1999
(51) Int. Cl.: B60N 2/28

(54) **Car seat for children**

(30) Priority: 21.08.1998 ES 9802261
(71) Applicant: PLAY, S.A., 08184 Palau de Plegamans (Barcelona) (ES)
(72) Inventor: Jane Stopp, Joaquim, 08184 Palau de Plegamans (ES)
(74) Representative: Ponti Sales, Adelaida

(57) **Abstract**

The child seat is characterised in that it comprises means for fastening the child seat to the seat of the car, said means comprising: a hook (7) arranged at the end of the rods (3), which is coupled to a bar of the car seat; locking means (11,12) to keep said hook (7) in the position coupled to the bar; first elastic means (9a,9b) which keep the hook (7) in contact with the means (11,12) for locking it in the position coupled to the bar, it being possible to withdraw the hook against the action of said first elastic means (9a,9b); and second elastic means (13) that tend to keep the hook (7) in a position in which there is no contact between the latter and the bar of the car seat.

A child seat is achieved that can quickly and easily be fastened to and released from the car seat.

## Description

The present invention relates to a child seat for cars, which allows the child seat to be fastened to and removed from the car seat quickly and easily.

There is currently concern for ensuring that children travel as safely as possible in cars. For this reason special child seats were designed for fitting on the rear seat of cars. One problem with these child seats lies in the manner of fastening them to the vehicle seat reliably and securely.

Some of these seats are fitted to the car seat by means of bands that pass round the child seat, but this type of fastening has been found to be very slow and awkward to implement.

There now exist child seats comprising a pair of rods which are fastened to a bar provided on the seat of the car. Although this type of fastening is much faster and more convenient to implement that the previous system using bands, it is also sometimes relatively complicated and awkward due to the complexity of the fastening mechanism provided on the ends of the rods.

The seat of the invention resolves the aforementioned drawbacks, while presenting other advantages which will be described below.

The child seat of the invention for cars comprises means for fastening the child seat to the seat of a car, said means comprising rods which can be fastened to a bar provided on the seat of the car, and is characterised in that said means for fastening the child seat to the seat of the car comprise:
a hook-like fastening element arranged at the end of the rods, which is coupled to the bar of the car seat;
locking means to keep said fastening element in the position coupled to the bar;
first elastic means which keep the fastening element in contact with the means for locking it in the position coupled to the bar, it being possible to withdraw the fastening element from the locking means against the action of said first elastic means; and
second elastic means that tend to keep the fastening element in a position in which there is no contact between the latter and the bar of the car seat.

This characteristic provides a car seat that can easily and conveniently be fastened to and detached from the seat of the car. Fastening is carried out simply by pressing the fastening element against the bar of the car seat, while the child seat can be detached by pressing in the opposite direction. The way in which fastening and detachment are carried out will be explained in greater detail below in describing a preferred embodiment of the invention.

Advantageously, this hook-like fastening element can rotate with respect to the rod around a transverse shaft, between a first position in which said hook is coupled to the bar of the car seat and a second position in which said hook is not in contact with the bar.

Preferably, said locking means are constituted by a stem, transversal with respect to the rod, which is inserted into a cavity provided in the fastening element.

According to a preferred embodiment of the invention, said stem is attached to a movable body associated with the first elastic means.

Advantageously, the second elastic means are associated with the shaft around which the fastening element rotates, the second elastic means tending to keep the fastening element in said second position.

Advantageously, said rods are extensible and are linked to each other by means of a bar, such to prevent one of the bars from being able to extend more than the other, since their extension with respect to the child seat will always be the same.

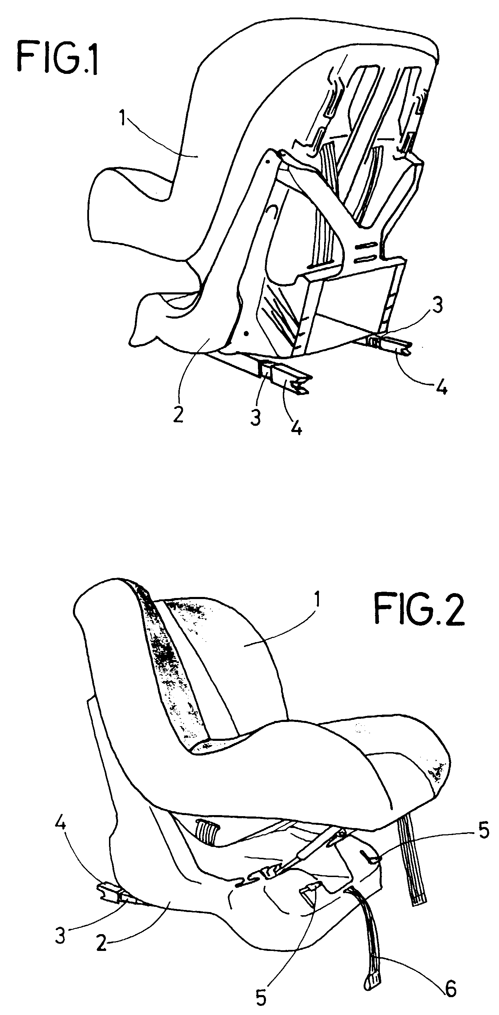

For a better understanding of all that has been described in this specification, some drawings have been attached which, solely by way of example, show a practical case of embodiment of the seat of the invention.
In said drawings, Figure 1 is a perspective view of the child seat for cars, viewed from its rear part;
Figure 2 is a perspective view of the child seat for cars, viewed from one side thereof;
Figures 3 and 4 are elevation views of the means for fastening the child seat to the car seat in released position and in fastened position, respectively, with said fastening means in cross section; and
Figure 5 is a plan view of said means for fastening the child seat of the invention to the seat of the car.

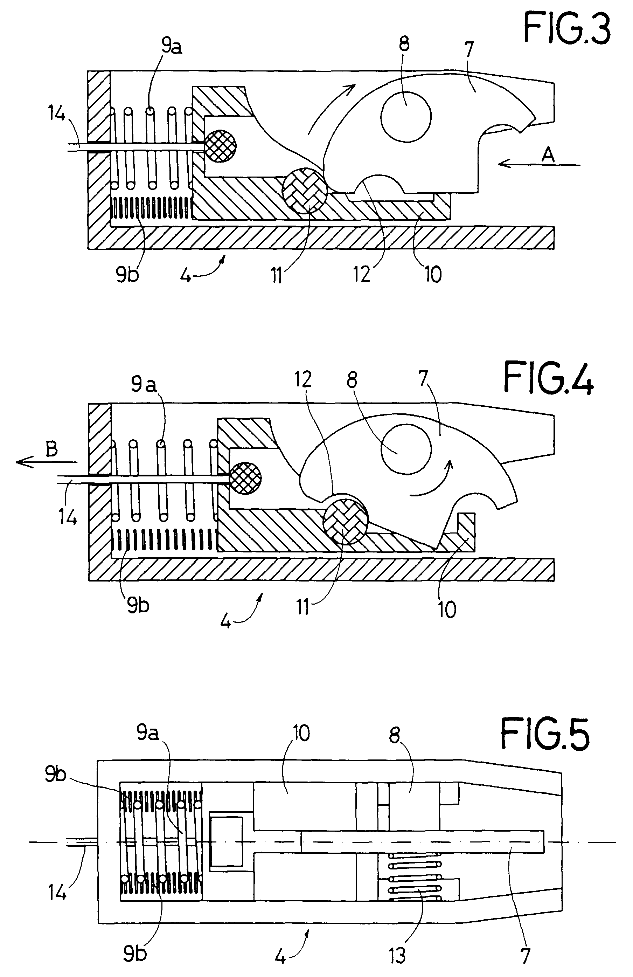

As can be seen in Figures 1 and 2, the child seat for cars comprises a seat 1 and a lower frame 2. The frame 2 is fitted with a pair of extensible rods 3 whose ends have means 4 for fastening them to the seat of the car. The frame 2 also includes a pair of levers 5 attached to the extensible rods 3 to drive the extension therof, and a band 6 for releasing the fastening means 4, whose function will be described in detail below with reference to Figures 3 and 4.

The remaining elements shown in Figures 1 and 2 are not described, since they are very well known and do not form part of this invention.

Figures 3 to 5 show the means 4 for fastening the child seat to the seat of the car.

Said fastening means 4 comprise a hook-like fastening element 7 which is coupled to a bar (not shown) provided on the seat of the car. This hook 7 rotates around a transverse shaft 8 between the positions shown in figures 3 and 4.

The fastening means 4 also comprise first elastic means constituted by a number of springs 9a, 9b. These springs 9a, 9b thrust a body 10 provided with means for locking the fastening element 7 in the coupling position shown in Figure 4.

These locking means are made up of a transverse stem 11 attached to the body 10 which is inserted into a cavity 12 provided in the fastening element 7, preventing rotation thereof.

The stem 8 is associated with second elastic means made up a spring 13 that tends to keep the fastening element 7 in the position shown in Figure 3.

Prior to fastening the child seat onto the seat of the car, the fastening element 7 is in the position shown in Figure 3. In this position the fastening element 7 prevents forward movement of the body 10, and therefore of the stem 11, towards the right according to Figure 3. Such movement is prevented due to the contact between the fastening element 7 and the stem 11, as can be seen clearly from Figure 3.

In order to fasten the child seat of the invention in position on the car seat, pressure is exerted on the bar of the seat (not shown) in the direction of arrow A in Figure 3. This pressure causes the fastening element 7 to rotate around the shaft 8, allowing the body 10 and the stem 11 to move forward due to the pressure of the springs 9a and 9b until the stem 11 is inserted into the cavity 12, at which moment the hook 7 will be coupled onto the bar of the seat, thereby preventing rotation of the fastening element 7.

In order to release the hook 7 from the bar of the seat pressure has to be applied in the direction of arrow B of Figure 4. This pressure is applied by pulling the band 6, which is attached to the body 10 by means of a wire 14. This pressure causes the body 10 to move in the direction of arrow B, causing the stem 11 to come out of the cavity 12 and the fastening element 7 to rotate due to the action of the spring 13.

Despite the fact that reference has been made to a specific embodiment of the invention, it will be obvious to the skilled man that the child seat for cars described is open to many variations and modifications and that all the details mentioned could be replaced by others technically equivalent, without departing from the scope of protection defined by the attached claims.

## Claims

1. A child seat for cars, which comprises means (4) for fastening the child seat to the seat of the car, said means comprising rods (3) that can be attached to a bar provided on the seat of the car, characterised in that said means for fastening the child seat to the seat of the car comprise:
a hook-like fastening element (7) arranged at the end of the rods (3), which is coupled to the bar of the car seat;
locking means (11,12) to keep said fastening element (7) in the position coupled to the bar;
first elastic means (9a,9b) which keep the fastening element (7) in contact with the means (11,12) for locking it in the position coupled to the bar, it being possible to withdraw the fastening element (7) from the locking means (11,12) against the action of said first elastic means (9a,9b); and
second elastic means (13) that tend to keep the fastening element (7) in a position in which there is no contact between the latter and the bar of the car seat.

2. A child seat as claimed in Claim 1, characterised in that said hook-like fastening element (7) can rotate with respect to the rod (3) around a transverse shaft (8), between a first position in which said hook (7) is coupled to the bar of the car seat and a second position in which said hook (7) is not in contact with the bar.

3. A child seat as claimed in Claim 1, characterised in that said locking means are constituted by a stem (11), transversal with respect to the rod (3), which is inserted into a cavity (12) provided in the fastening element (7).

4. A child seat as claimed in Claims 1 and 3, characterised in that said stem (11) is attached to a movable body (10) associated with the first elastic means (9a,9b).

5. A child seat as claimed in Claims 1 and 2, characterised in that the second elastic means (13) are associated with the shaft (8) around which the fastening element (7) rotates, said second elastic means (13) tending to keep the fastening element (7) in said second position.

6. A child seat as claimed in Claim 1, characterised in that said rods (3) are extensible.

7. A child seat as claimed in Claims 1 or 6, characterised in that said rods (3) are linked to each other by means of a bar.
